# EUROPÄISCHE PATENTSCHRIFT

(11) **EP 0 956 486 B1**
(45) Veröffentlichungstag und Bekanntmachung des Hinweises auf die Patenterteilung: **01.08.2001**
(21) Anmeldenummer: 97954343.6
(22) Anmeldetag: 15.11.1997
(51) Int. Cl.: F25D 29/00, F25D 17/06

(54) **KÜHL- UND/ODER GEFRIERGERÄT FÜR DEN HAUSHALT**
DOMESTIC REFRIGERATOR AND/OR FREEZER
REFRIGERATEUR ET/OU CONGELATEUR A USAGE MENAGER

(30) Priorität: 11.12.1996 DE 19651565; 16.01.1997 DE 19701379
(43) Veröffentlichungstag der Anmeldung: 17.11.1999
(73) Patentinhaber: AEG Hausgeräte GmbH, 90429 Nürnberg (DE)
(72) Erfinder: GLÄNZER, Bernd, D-34626 Neukirchen (DE)
(86) Internationale Anmeldenummer: EP9706381
(87) Internationale Veröffentlichungsnummer: WO9826242

(56) Entgegenhaltungen:
- EP-A- 0 320 574
- DE-A- 3 404 256
- DE-U- 8 800 436
- FR-A- 1 196 363
- FR-A- 2 188 123
- US-A- 3 027 732
- US-A- 4 364 234
- US-A- 4 876 860
- US-A- 4 966 004
- US-A- 5 060 486

## Beschreibung

Die Erfindung bezieht sich auf ein Kühl- und/oder Gefriergerät für den Haushalt.

Kühl- und/oder Gefriergeräte verfügen bereits heute häufig über elektronische Regeleinrichtungen, die die Temperatur im Innenraum der Geräte auf den vom Benutzer eingestellten Temperaturwert einregeln. Dabei sind die Geräte üblicherweise so ausgelegt, daß der Kältemittelkreislauf (Kältemaschine) auf die vorgesehene Verwendung des Geräts als Kühlgerät oder als Gefriergerät oder als Kühl/Gefrierkombination ausgelegt ist. Bei einer derartigen einmalig festgelegten Auslegung und resultierender Ausgestaltung des Geräts können die Sollwertvorgaben der elektronischen Regelung bestimmungsgemäß nur einen bestimmten Temperaturbereich zulassen, so daß sich das Gerät nur als Gefrier- oder nur als Kühlgerät betreiben läßt.

Es sind auch Kältegeräte bekannt, die als sogenannte Mehrzonengeräte ausgelegt sind. Für jede Temperaturzone ist mindestens ein Kühlfach vorhanden, dessen Temperatur sich über die Steuereinrichtung in einem für die jeweilige Temperaturzone zulässigen Bereich separat einstellen und regeln läßt. Hierbei sind auch die Grundfunktionen (Kühlen, Lagern, Gefrieren) den jeweiligen Kühlfächern fest zugeordnet und nicht veränderbar.

Aus der FR-A-2 188 123 ist ein Transport-Kühlbehälter mit einem Kältemittel-Kreislauf und einer Einrichtung zur Soll-Temperatureinstellung für den Kühlbehälter bekannt. Mit dieser Einrichtung kann für den Kühlbehälter je nach Bedarf eine zwischen -15°C und +20°C liegende Kühl- und Aufbewahrungstemperatur vorgegeben werden.

Bei einer aus der US-A-4 364 234 bekannten Isolierkammer zum thermischen Testen von Gegenständen und Materialien kann eine Kühl- oder Heiztemperatur in kleinen Stufen von einem Grad Celsius eingestellt werden.

Aus der US-A-5 060 486 ist ein Kältegerät bekannt, das entweder als Weinkühler, Kühl- oder Gefriergerät betrieben werden kann.

Der Erfindung liegt daher die Aufgabe zugrunde ein Haushalt-Kältegerät anzugeben, welches besser an die Bedürfnisse des Benutzers angepaßt ist als die Geräte nach dem Stand der Technik.

Die Lösung dieser Aufgabe wird durch die im Hauptanspruch angegebenen Merkmale erzielt. Zweckmäßige Ausgestaltungen und Weiterbildungen der Erfindung ergeben sich aus den Unteransprüchen.

Aufgrund der Auslegung des Geräts auf Gefrierbetrieb des gesamten Geräts ist das erfindungsgemäße Gerät in der Lage, als Gefriergerät mit einer Innenraum-Solltemperatur von -18° Celsius oder niedriger betrieben werden zu können. Bedarfsweise kann jedoch für jeden der Lagerfächer separat durch Verstellung der vorgegebenen Temperatur von einem Gefrierbetrieb bei -18° oder niedriger auf einen Gefrierbetrieb bei Temperaturen knapp unterhalb des Gefrierpunkts des Wassers oder auf einen Betrieb auf dem Gefrierpunkt des Wassers oder einen Kühlbetrieb bei Temperaturen mehr oder weniger oberhalb des Gefrierpunkts des Wassers, wie z.B. der Normkühltemperatur von 5° Celsius, benutzerseitig umgestiegen werden. Auf diese Weise ist das Kältegerät in bisher nicht bekannter Weise an die Bedürfnisse des Benutzers angepaßt worden.

Zur Ausgestaltung der Erfindung eignet sich besonders gut ein Umluftkältegerät. Bei einem derartigen Gerät sind die kälteerzeugenden Bauteile, im besonderen der Kältemittelverdampfer, in einem vom Nutzraum des Geräts getrennten Volumen angeordnet. Die Auslegung dieses Verdampfers auf den Betriebszustand "Gefrieren" des gesamten Geräts ist daher für den Benutzer unsichtbar in diesem vom Nutzraum abseits gelegenen Volumen vollzogen.

Als sinnvolles Temperaturintervall, das den Gefrierpunkt des Wasser umgibt, kann zur Wahrung der Grundfunktionen des Geräts ein Temperaturintervall von -18° Celsius bis + 15° Celsius angesehen werden. Will man dem Gerätebenutzer darüber hinausgehende Möglichkeiten zur Temperatureinstellung geben, kann das Temperaturintervall alternativ von - 30° Celsius bis + 20° Celsius reichen.

Das Gerät ist besonders komfortabel bedienbar und die Solltemperatur ausreichend fein einstellbar, wenn die Temperatur in Schritten von 1° Celsius vorgebbar ist, vorzugsweise mit Anzeige von eingestelltem Soll- und vorliegendem Istwert, beispielsweise durch 7-Segment-Anzeigen.

Das Gerät ist zur Einstellung der vorgebbaren Temperatur besonders sparsam bezüglich Einrichtungsteilen, Fertigung und konstruktivem Aufwand aufgebaut, wenn zwei diskrete Temperaturen mittels zweier unterschiedlicher Tasten oder Tastenkombinationen vorgebbar sind. Dabei kann eine erste Taste oder Tastenkombination vorgesehen sein, die einen Kühlbetrieb bei einer Temperatur von + 5° Celsius repräsentiert. Eine zweite Taste oder Tastenkombination kann einen Gefrierbetrieb bei einer Temperatur von - 18° Celsius repräsentieren und ergänzend kann eine dritte Taste oder Tastenkombination einen Kühllagerbetrieb bei einer Temperatur von 0° Celsius repräsentieren

Darüber hinaus kann eine separate Taste oder Tastenkombination vorgesehen sein, mit der die durch eine der zwei bzw. drei Tasten oder Tastenkombinationen vorgegebene Temperatur innerhalb vorgegebener Grenzen nach oben oder nach unten verstellbar ist. Hiermit kann beispielsweise vom Benutzer des Geräts ein Kühlbetrieb bei 15° Celsius (Weinlagerbetrieb) 8° Celsius oder 0° Celsius (Longfresh-Betrieb) oder ein Gefrierbetrieb bei -10° Celsius oder dergleichen vorgegeben werden.

Gemäß der Erfindung ist die Temperatur für jedes Lagerfach separat vorgebbar. Für eine derartige Ausgestaltung eignet sich wiederum besonders gut ein Umluftkältegerät, weil dieses Gerät bereits Mittel zur separaten Temperatureinstellung der jeweiligen Lagerfächer, wie z.B. Luftzuführungsklappen, aufweist.

Weil der Kältekreislauf auf den Gefrierbetrieb eines jeden Teilbereichs ausgelegt ist, ist es daher anschließend im Sinne der Erfindung für den Benutzer einfach realisierbar, in einzelnen Teilbereichen höhere Temperaturen als Gefriertemperaturen einzustellen. Die Umluftzuführungsklappe für einen derartigen Teilbereich wird dann in einer Weise gesteuert, daß gegenüber einem Gefrierbetrieb weniger Luft und/oder weniger kalte Luft und/oder weniger lange kalte Luft in diesen Teilbereich eingeleitet wird. Der Aufbau eines derartigen Geräts ist jedoch vergleichsweise technisch aufwendig und teuer.

Ausführungsbeispiele der Erfindung werden anhand einer Zeichnung näher erläutert. Dabei zeigen:
- Figur 1: einen Längsschnitt in seitlicher Ansicht durch ein Kühlgerät; und
- Figur 2: vier Ausführungsvarianten der Bedienelemente des Kühlgeräts gemäß Figur 1.

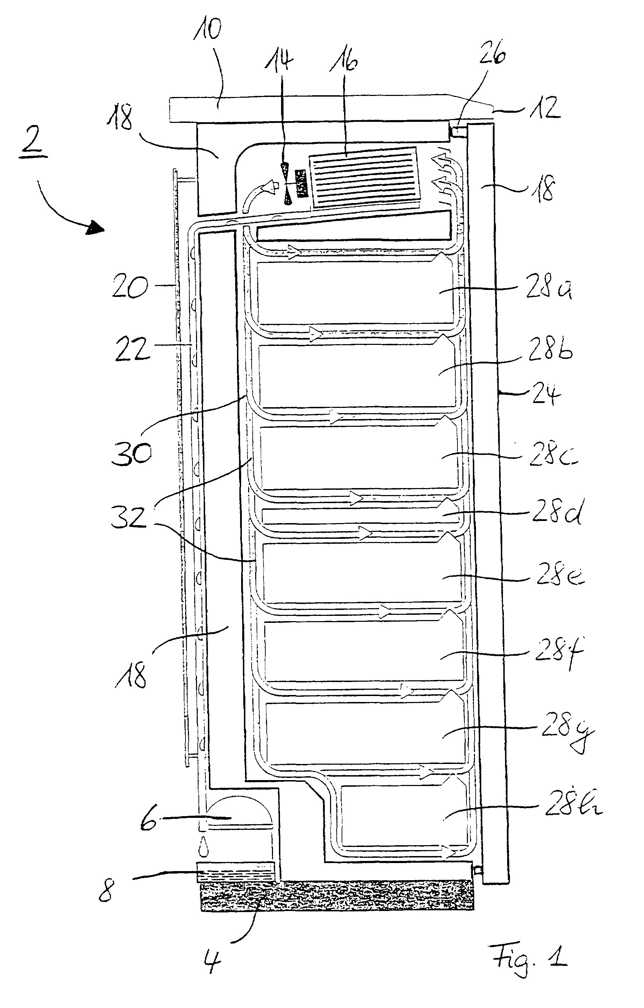

Figur 1 zeigt einen Längsschnitt eines Kühlgeräts 2 mit Umlufttechnik. Das Kühlgerät 2 umfaßt einen Sockelbereich 4 mit Kompressor 6 und Verdunstungsschale 8 sowie einen unterhalb eines Deckels 10 angeordneten, mittels eines Ventilator 14 zwangsbelüfteten Kältemittelverdampfer 16. Der Deckel 10 umfaßt frontseitig ein Bedien-Panel 12. Auf der Rückseite des Geräts 2 sind außenliegend hinter einer thermischen Isolierschicht 18 ein Kältemittelverflüssiger 20 und ein Fallrohr 22 für das am Kältemittelverdampfer 16 abgetaute Wasser angeordnet. Frontseitig eröffnet eine Tür 24 mit umlaufender Türdichtung 26 den Zugang zu Lagerfächern 28a bis 28h. Über einen rückwärtig, innerhalb der thermischen Isolierung 18 angeordneten Kühlluftströmungskanal 30 werden die Kühlfächer 28a bis 28h mittels am Kältemittelverdampfer 16 abgekühlter und mittels des Ventilators 14 angetriebener Kaltluft 32 beaufschlagt. Saugseitig wird die Kaltluft 32 nach Wärmetausch auf der Innenseite der Tür 24 über entsprechende mehr oder weniger offene Kühlluftströmungskanäle zum Kältemittelverdampfer 16 zurückgeführt.

Die Kältemaschine, umfassend den Kompressor 6, den Kältemittelverflüssiger 20 und den mittels des Ventilators 14 im Umluftbetrieb betriebenen Kältemittelverdampfer 16, ist im Ausführungsbeispiel derart ausgelegt, daß der gesamte Innenraum, d.h. im besonderen die Lagerfächer 28a bis 28h, im Gefriermodus betreibbar ist. Eine hier nicht weiter dargestellte Einrichtung zur Temperatureinstellung, umfassend hier nicht weiter dargestellte Mittel zur Temperaturerfassung, zur Steuerung des Kompressors 6 und zur Steuerung des Ventilators 14, regelt in diesem Fall die Temperatur des Innenraums auf - 18° Celsius ein.

Die Einrichtung zur Temperatureinstellung, die auch das Bedien-panel 12 umfaßt, ist jedoch insbesondere bezüglich der im Ausführungsbeispiel gewählten Mikroprozessor-gesteuerten Temperaturregelung so ausgelegt, das Kühlgerät 2 alternativ bei einer Temperatur von 0° Celsius (0° Celsius-Fach, bevorzugte Gemüselagerung) oder als Normalkühlgerät mit einer Temperatur von +5° Celsius zu betreiben.

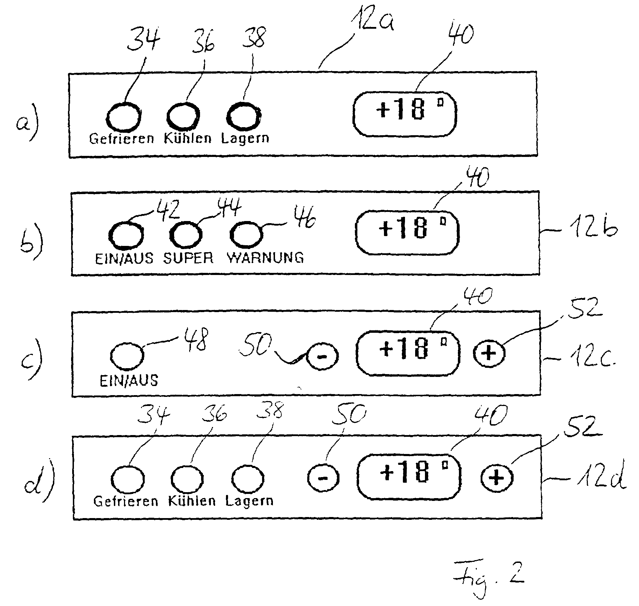

Ein zur Durchführung dieser drei vorgenannten Betriebsgrundarten geeignetes Bedienpanel 12a ist in Figur 2, Variante a), gezeigt. Das Bedienpanel 12a umfaßt drei separate Tasten 34, 36, 38, welche dem Betriebszustand "Gefrieren" bzw. "Kühlen" bzw. "Lagern" zugeordnet sind. Hierbei wird das Gerät 2 durch Drükken einer der drei Tasten 34, 36, 38 in dem ausgewählten Betriebszustand in Betrieb genommen und ist durch Drücken einer der beiden anderen Tasten in den jeweils den Tasten zugeordneten Betriebszustand überführbar oder durch nochmaliges Drücken der den aktuellen Betriebszusstand repräsentierenden Taste wieder ausschaltbar. Dem Bediener des Geräts wird die Temperatur im Innenraum des Kühlgeräts 2 mittels eines Displays 40 angezeigt.

Die Variante b) zeigt drei Tasten 42, 44, 46, wobei durch Betätigen der Ein-/Aus-Taste 42 der Temperaturbereich "Gefrieren" aktiviert wird. Wird der Temperaturbereich "Kühlen" gewünscht so kann dies hier vorliegend über eine gleichzeitige Betätigung der Ein/Aus-Taste 42 und der Warnung-Taste 46 erfolgen. Analog wird der Temperaturbereich "Lagern" durch eine gleichzeitige Betätigung der Ein/Aus-Taste 42 und der Super-Taste 44 gewählt. Es ist weiter vorgesehen, daß das Gerät zunächst über die Ein/Aus-Taste 42 ausgeschaltet werden muß, wenn der Temperaturbereich gewechselt werden soll. Diese Variante ist besonders kindersicher, weil nur durch Drücken einer Tastenkombination von einem Temperaturbereich zu einem anderen Temperaturbereich gewechselt werden kann.

Gemäß einer dritten Variante c) erfolgt die Einstellung des Kühlgeräts 2 ebenfalls auch über Tastenkombinationen, ebenso wie dies in Variante b) vorgesehen war. Jeder Tastenkombination ist eine Temperaturzone mit einem der Temperaturzone zugehörigen verstellbaren Solltemperaturbereich zugeordnet. Wird beispielsweise der Temperaturbereich "Gefrieren" gewünscht, so wird dieser durch Betätigen der Ein/Aus-Taste 48 aktiviert. Wird indessen der Temperaturbereich "Kühlen" gewünscht, so wird dieser über die gleichzeitige Betätigung der Ein/Aus-Taste 48 und der Minus-Taste 50 aktiviert. Eine Temperaturwahl innerhalb des der Temperaturzone zugeordneten zulässigen Bereichs ist über die Minus- oder Plus-Taste 50 bzw. 52 möglich. Zum Wechsel des Temperaturbereichs ist es auch hier vorgesehen, das Gerät zunächst über die Ein/Aus-Taste 48 auszuschalten.

Die letzte Variante d) stellt eine Kombination der Varianten a) und c) dar. So wird hier zunächst der Temperaturbereich über die drei Tasten 34, 36, 38 gewählt und kann über die Tasten 50, 52 nach oben oder unten variiert werden. In dieser Variante ist es vorgesehen, daß das Bedienpanel 12d ein optisches und/oder akustisches Signal generiert, wenn während der Modifizierung die eingestellte Solltemperatur den mittels einer der Tasten 34, 36, 38 eingestellten Temperaturbereich verläßt. Eine Warnung zum Hinweis auf das Verlassen des ausgewählten Temperaturbereichs kann auch beispielsweise schon in der Variante c) implementiert sein.

Alle vorangegangenen Ausführungsbeispiele beziehen sich darauf, daß wahlweise für das gesamte Gerät ein Temperaturbereich mit mehr oder weniger eng ermöglichter Variation der Solltemperatur in diesem Temperaturbereich vorgesehen ist.

In hier nicht weiter dargestellter Weise ist es gemäß der Erfindung vorgesehen, daß jedem der Kühlfächer 28a bis 28h ein Bedienpanel 12, z.B. gemäß einer der Varianten a) bis d) gemäß Figur 2, zugewiesen wird, so daß der Benutzer eines solchen Geräts, das Gerät über "fließende" Grenzen hinweg im oberen Bereich beispielsweise als Kühlgerät, im mittleren Bereich als Lagergerät und im unteren Bereich als Gefriergerät betreiben kann, wobei das Gerät im Grenzfall auch nur als Gefrier-, Lager-, oder Kühlgerät betreibbar ist. Ein derartiges Gerät weist allerdings eine dementsprechend hohe Anzahl von Bedienpanels 12 und Regel- sowie Luftführungseinrichtungen auf.

Die hier für ein Gerät mit Umluftbetrieb beschriebenen Ausführungsbeipiele sind selbstverständlich auch auf ein Gerät mit stiller Kühlung übertragbar. Besonders wichtig für die freie Variierbarkeit des Gerätebetriebs ist letztendlich, daß die Kältemaschine auf Gefrierbetrieb ausgelegt ist und die Einrichtung zur Temperatureinstellung einen ausreichend weiten Temperaturbereich zur Sollwert-Vorgabe abdeckt. Ein derartiger Bereich kann beispielsweise von -30° bis +20° C oder von -18° bis + 15° Celsius reichen.

Weiter kann es zur Erhaltung der Kälteklassen vorgesehen sein, daß für den Gefrierbetrieb nur eine Temperatur von -25° C bis -15° C vorgebbar ist. Analog kann für den Kühlbetrieb nur eine Temperatur von 0° C bis +15° C vorgebbar sein.

Darüberhinaus können eine oder mehrere Tasten oder Tastenkombinationen zur Aktivierung von speziellen Kälteprogrammen vorgesehen sein. So kann beispielsweise ein Programm "COOLMATIC" implementiert sein, daß im Kühlbetrieb nach dessen Aktivierung die Solltemperatur auf einen Wert von +2° C für eine Dauer von 6 Stunden setzt und anschließend selbsttätig zum normalen, vorgegebenen Kälteprogramm (Betriebsart) zurückkehrt. Vergleichbare Sonderprogramme für den Gefrierbetrieb, wie beispielsweise eine SUPER-Funktion, sind ebenfalls möglich. Auch kann der Übergang von einer Betriebsart in eine andere Betriebsart ermöglicht sein. Bei Vorhandensein einer Uhr kann es beispielshaft vorgesehen sein, bis 0⁰⁰ Uhr im Kühlbetrieb zu arbeiten und anschließend im 3-Sterne-Gefrierbetrieb bei -18° C weiterzuarbeiten oder umgekehrt.

## Patentansprüche

1. Kühl- und/oder Gefriergerät (2) für den Haushalt mit einem mehrere Lagerfächer (28a bis 28h) aüfweisenden Innenraum, mit einem auf Gefrierbetrieb des gesamten Geräts ausgelegten Kältemittelkreislauf (6, 16, 20) und einer Einrichtung zur Temperatureinstellung, insbesondere einem elektronischen Temperaturregler, wobei die Einrichtung zur Temperatureinstellung ein bedienerseitig vorgesehenes Einstellorgan umfaßt, an dem für die einzelnen Lagerfächer (28a bis 28h) eine innerhalb eines bestimmten Temperaturintervalls liegende Soll-Temperatur vorgebbar ist, wobei die vorgebbare Soll-Temperatur unterhalb 0°C, gleich 0°C oder oberhalb 0°C einstellbar ist und diese Temperatur für jeden der Lagerfächer (28a bis 28h) separat vorgebbar ist und die Einrichtung zur Temperatureinstellung das Signal des Einstellorgans zur Einstellung der Ist-Temperatur heranzieht.

2. Kältegerät nach Anspruch 1,
gekennzeichnet durch ein Umluftkältegerät.

3. Kältegerät nach Anspruch 1 oder 2,
dadurch gekennzeichnet, daß
das Temperaturintervall von -18°C bis +15°C reicht.

4. Kältegerät nach Anspruch 1 oder 2,
dadurch gekennzeichnet, daß
das Temperaturintervall von -30°C bis +20°C reicht.

5. Kältegerät nach einem der Ansprüche 1 bis 4,
dadurch gekennzeichnet, daß
die Temperatur für die einzelnen Lagerfächer (28a bis 28h) in Schritten von einem Grad Celsius vorgebbar ist.

6. Kältegerät nach einem der Ansprüche 1 bis 4,
dadurch gekennzeichnet, daß
zwei Temperaturenzonen mittels zweier unterschiedlicher Tasten oder Tastenkombinationen vorgebbar sind.

7. Kältegerät nach Anspruch 6,
dadurch gekennzeichnet, daß
a) eine erste Taste (36) oder Tastenkombination einen Kühlbetrieb bei einer Temperatur von +5°C repräsentiert;
b) eine zweite Taste (34) oder Tastenkombination einen Gefrierbetrieb bei einer Temperatur von -18°C repräsentiert; und ggf.
c) eine dritte Taste (38) oder Tastenkombinätion einen Kühllagerbetrieb bei einer Temperatur von 0°C repräsentiert.

8. Kältegerät nach Anspruch 6 oder 7,
dadurch gekennzeichnet, daß
eine separate Taste (50, 52) oder Tastenkombination vorgesehen ist, mit der die durch eine der zwei bzw. drei Tasten oder Tastenkombinationen vorgegebene Temperatur innerhalb vorgegebener Grenzen nach oben oder nach unten verstellbar ist.

9. Kältegerät nach einem der.Ansprüche 1 bis 8,
dadurch gekennzeichnet, daß
mittels einer Taste oder Tastenkombination ein spezielles Kälteprogramm aktivierbar ist.

## Claims

1. Refrigerator and/or freezer (2) for domestic use having an inner chamber having a plurality of storage trays (28a to 28h), having a coolant circuit (6, 16, 20) adapted for freezer operation of the entire appliance and a device for setting the temperature, in particular an electronic thermostat, wherein the device for setting the temperature comprises a setting element provided accessible to the operator, whereby for the individual storage trays (28a to 28h) a reference temperature lying within a certain temperature interval can be specified, wherein the specifiable reference temperature can be set below 0°C, equal to 0°C or above 0°C and this temperature is specifiable separately for each of the storage trays (28a to 28h) and the device for setting the temperature applies the signal of the setting element to set the actual temperature.

2. Refrigerating appliance according to claim 1, characterised by an air-circulation refrigerating appliance.

3. Refrigerating appliance according to claim 1 or 2, characterised in that the temperature interval extends from -18°C to +15°C.

4. Refrigerating appliance according to claim 1 or 2, characterised in that the temperature interval extends from -30°C to +20°C.

5. Refrigerating appliance according to one of claim 1 to 4, characterised in that the temperature for the individual storage trays (28a to 28h) is specifiable in stages from one degree Celsius.

6. Refrigerating appliance according to one of claim 1 to 4, characterised in that two temperature zones are specifiable by means of two different keys or key combinations.

7. Refrigerating appliance according to claim 6, characterised in that
a) a first key (36) or key combination represents refrigeration operation at a temperature of +5°C;
b) a second key (34) or key combination represents freezing operation at a temperature of -18°C; and optionally
c) a third key (38) or key combination represents cold storage operation at a temperature of 0°C.

8. Refrigerating appliance according to claim 6 or 7, characterised in that a separate key (50, 52) or key combination is provided, with which the temperature specified by one of the two or three keys or key combinations can be adjusted up or down within specified limits.

9. Refrigerating appliance according to one of claims 1 to 8, characterised in that by means of a key or key combination a special coldness program can be activated.

## Revendications

1. Réfrigérateur et/ou congélateur (2) à usage ménager avec un espace intérieur présentant plusieurs cases de stockage (28a à 28h), avec un circuit d'agent réfrigérant (6, 16, 20) conçu pour un fonctionnement de congélation de tout l'appareil et une installation pour le réglage de la température, notamment un organe de réglage de température électronique, où l'installation pour le réglage de la température comprend un organe de réglage prévu côté opérateur au moyen duquel peut être prédéterminée une température de consigne située à l'intérieur d'un intervalle de température défini pour les cases de stockage individuelles (28a à 28h), où la température de consigne pouvant être prédéfinie peut être réglée pour être inférieure à 0°C, égale à 0°C ou supérieure à 0°C, et cette température peut être prédéfinie pour chacune des cases de stockage (28a à 28h) séparément, et l'installation pour le réglage de la température utilise le signal de l'organe de réglage pour le réglage de la température réelle.

2. Appareil frigorifique selon la revendication 1, caractérisé par un appareil frigorifique à circulation d'air.

3. Appareil frigorifique selon la revendication 1 ou 2, caractérisé en ce que l'intervalle de température s'étend de -18°C à +15°C.

4. Appareil frigorifique selon la revendication 1 ou 2, caractérisé en ce que l'intervalle de température s'étend de -30°C à +20°C.

5. Appareil frigorifique selon l'une des revendications 1 à 4, caractérisé en ce que la température pour les cases de stockage individuelles (28a à 28h) peut être prédéfinie selon des pas d'un degré Celsius.

6. Appareil frigorifique selon l'une des revendications 1 à 4, caractérisé en ce que deux zones de température peuvent être prédéfinies au moyen de deux touches ou combinaisons de touches différentes.

7. Appareil frigorifique selon la revendication 6, caractérisé en ce que
a) une première touche (36) ou une combinaison de touches représente un fonctionnement frigorifique à une température de +5°C ;
b) une deuxième touche (34) ou combinaison de touches représente un fonctionnement de congélation à une température de -18°C ; et le cas échéant
c) une troisième touche (38) ou combinaison de touches représente un fonctionnement de stockage réfrigérant à une température de 0°C.

8. Appareil frigorifique selon la revendication 6 ou 7, caractérisé en ce qu'une touche séparée (50, 52) ou combinaison de touches est prévue au moyen de laquelle la température prédéfinie par une des deux respectivement trois touches ou combinaisons de touches peut être réglée à l'intérieur de limites prédéterminées vers le haut ou vers le bas.

9. Appareil frigorifique selon l'une des revendications 1 à 8, caractérisé en ce qu'un programme frigorifique spécial peut être activé au moyen d'une touche ou d'une combinaison de touches.
